# FASCICULE DE BREVET EUROPEEN

(11) **EP 4 086 483 B1**
(45) Date de publication et mention de la délivrance du brevet: **04.09.2024**
(21) Numéro de dépôt: 22170472.9
(22) Date de dépôt: 28.04.2022
(51) Int. Cl.: F16H 57/04, F02C 7/36, F02C 7/06

(54) **DISPOSITIF DE LUBRIFICATION AMÉLIORÉ POUR RÉDUCTEUR DE TURBOMACHINE**
VERBESSERTE SCHMIERVORRICHTUNG FÜR DAS REDUKTIONSGETRIEBE EINER TURBOMASCHINE
IMPROVED LUBRICATION DEVICE FOR TURBINE ENGINE GEAR

(30) Priorité: 06.05.2021 FR 2104786
(43) Date de publication de la demande: 09.11.2022
(73) Titulaire: Safran Transmission Systems, 92700 Colombes (FR)
(72) Inventeur: PAP, Bálint, 77550 MOISSY CRAMAYEL (FR); GEDIN, Patrice Jocelyn Francis, 77550 MOISSY CRAMAYEL (FR); PENNACINO, Antoine Jacques Marie, 77550 MOISSY CRAMAYEL (FR)
(74) Mandataire: Cabinet Beau de Loménie

(56) Documents cités:
- EP-A1- 3 351 829
- FR-A1- 3 041 054
- FR-A1- 3 074 552

## Description

### Domaine Technique

La présente invention concerne le domaine des turbomachines, et vise plus précisément les distributeurs d'huile entre deux composants mobiles en rotation l'un par rapport à l'autre d'une turbomachine.

### Technique antérieure

La distribution d'huile entre deux éléments mobiles en rotation l'un par rapport à l'autre d'une turbomachine, en vue d'assurer la lubrification et le refroidissement des composants, pose des problématiques liées notamment à l'effet de l'huile sur le mouvement de rotation, et en particulier le risque de déséquilibrage et de vibrations qu'entrainerait une accumulation d'huile.

Le document FR3041054 présente ainsi un système de distribution d'huile pour un réducteur de turbomachine, dans lequel le porte-satellites comprend une coupelle d'alimentation d'huile, munie de parois radiales définissant une pluralité de cuvettes adaptées pour recevoir l'huile et reliées à des circuits de distribution d'huile. La répartition de l'huile dans les cuvettes permet ainsi de répartir l'huile entre les différents circuits de distribution d'huile.

Le document FR3047279 présente également un système similaire, dans lequel l'huile est répartie entre différentes cuvettes agencées autour de l'axe de rotation. Le document FR3074552 A1 présente un autre exemple de système connu.

Les structures présentées dans ces documents présentent cependant une problématique en cas de déséquilibre entre les différentes cuvettes, ce qui peut aboutir à la formation d'un déséquilibre de masse, et ainsi impacter le mouvement de rotation.

La présente invention vise ainsi à répondre au moins partiellement à cette problématique.

### Exposé de l'invention

La présente invention concerne ainsi un dispositif de lubrification pour un réducteur de turbomachine, présentant un axe principal,
le dispositif comprenant une coupelle annulaire de collecte d'huile de lubrification délimitée par une première paroi et une seconde paroi,
ladite coupelle étant divisée par des parois internes s'étendant entre le première paroi et la seconde paroi de manière à définir une pluralité de secteurs angulaires formant des cuvettes de collecte d'huile, les cuvettes étant circonférentiellement adjacentes autour de l'axe et comprenant des sorties d'huiles de lubrification destinées à la lubrification du réducteur,
dans lequel une ou plusieurs desdites parois internes présentent des orifices permettant un passage d'huile entre les cuvettes circonférentiellement adjacentes,
caractérisé en ce que lesdits orifices sont formés dans une ou plusieurs desdites parois internes de manière à définir une ou plusieurs rangées d'orifices dans lesdites une ou plusieurs parois internes.

Selon un exemple, chacune desdites parois interne comprend des orifices.

Selon un exemple, lesdites parois internes présentent une hauteur h mesurée selon la direction radiale par rapport à l'axe principal, et dans lequel des orifices sont formés dans une moitié radiale interne de chaque paroi interne.

Selon un exemple, lesdites parois internes présentent une hauteur h mesurée selon une direction radiale par rapport à l'axe principal, et dans lequel des orifices sont formés dans une moitié radiale externe de chaque paroi interne.

Lesdites rangées d'orifices sont typiquement disposées, dans lesdites une ou plusieurs parois (38) internes, en lignes et en colonnes, de manière à former une matrice d'orifices.

La présente invention concerne étalement un réducteur comprenant un arbre d'entrée, un solaire, des satellites et un arbre de sortie, ledit réducteur comprenant un dispositif tel que défini précédemment, monté axialement autour de l'arbre d'entrée, de sorte que les sorties d'huile des cuvettes sont orientées pour déboucher vers les satellites, le solaire ou des paliers des satellites.

L'invention concerne également un ensemble comprenant un arbre s'étendant autour d'un axe principal et un dispositif tel que défini dans l'une des revendications 1 ou 2 s'étendant autour dudit axe principal, dans lequel lesdites parois internes sont formées sur l'arbre.

L'invention concerne également un ensemble comprenant un arbre s'étendant autour d'un axe principal et un dispositif tel que défini dans l'une des revendications 1 ou 2 s'étendant autour dudit axe principal, dans lequel lesdites parois internes sont formées sur la coupelle.

La présente invention concerne en outre une turbomachine comprenant un tel réducteur.

### Brève description des dessins

L'invention et ses avantages seront mieux compris à la lecture de la description détaillée faite ci-après de différents modes de réalisation de l'invention donnés à titre d'exemples non limitatifs.
[Fig. 1] La figure 1 présente schématiquement une vue en coupe axiale d'une turbomachine mettant en oeuvre l'invention.
[Fig. 2] La figure 2 présente une vue détaillée en coupe d'un réducteur à train épicycloïdal, équipé d'un rouet selon l'invention.
[Fig. 3] La figure 3 est une vue éclatée, en perspective, du réducteur de la figure 2.
[Fig. 4] La figure 4 présente une vue schématique d'un rouet d'un ensemble selon l'invention.
[Fig. 5] La figure 5 présente une vue schématique en coupe axiale d'un rouet d'un ensemble selon l'invention.
[Fig. 6] La figure 6 présente une vue en perspective axiale d'un rouet d'un ensemble selon l'invention.
[Fig. 7] La figure 7 présente une vue en perspective d'un ensemble selon un mode de réalisation de l'invention.

Sur l'ensemble des figures, les éléments en commun sont repérés par des références numériques identiques.

### Description des modes de réalisation

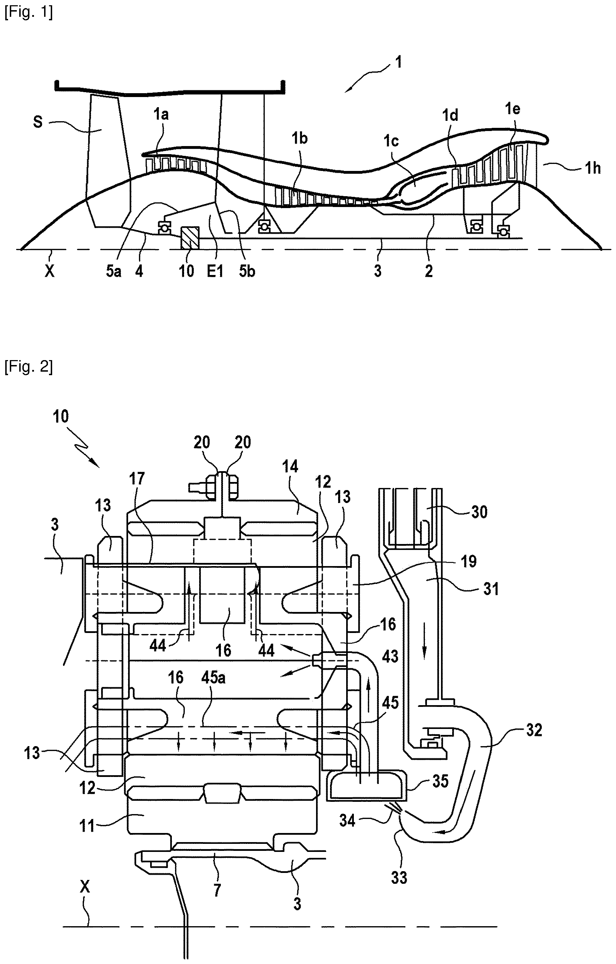

En référence à la figure 1, l'invention concerne, par exemple, une turbomachine 1 qui comporte, de manière classique, une hélice de soufflante S, un compresseur basse pression 1a, un compresseur haute pression Ib, une turbine haute pression 1d, une turbine basse pression le et une tuyère d'échappement 1h. Le compresseur haute pression 1b et Ia turbine haute pression 1d sont reliés par un arbre haute pression 2 et forment avec lui un corps haute pression (HP).

Le compresseur basse pression la et la turbine basse pression sont reliés par un arbre basse pression 3 et forment avec lui un corps basse pression (BP). Dans un exemple de configuration, l'hélice de soufflante S est entraînée par un arbre de soufflante 4 qui est couplé à l'arbre BP 3 au moyen d'un réducteur 10 à train épicycloïdal. Le réducteur 10 est positionné dans la partie amont de la turbomachine. Une structure fixe comportant schématiquement, ici, une partie amont 5a et une partie aval 5b est agencée de manière à former un enceinte E1 entourant le réducteur 10.

Cette enceinte E1 est ici fermée en amont par des joints au niveau d'un palier 6a permettant la traversée de l'arbre de soufflante 4, et en aval par des joints au niveau de la traversée 6b de l'arbre BP 3.

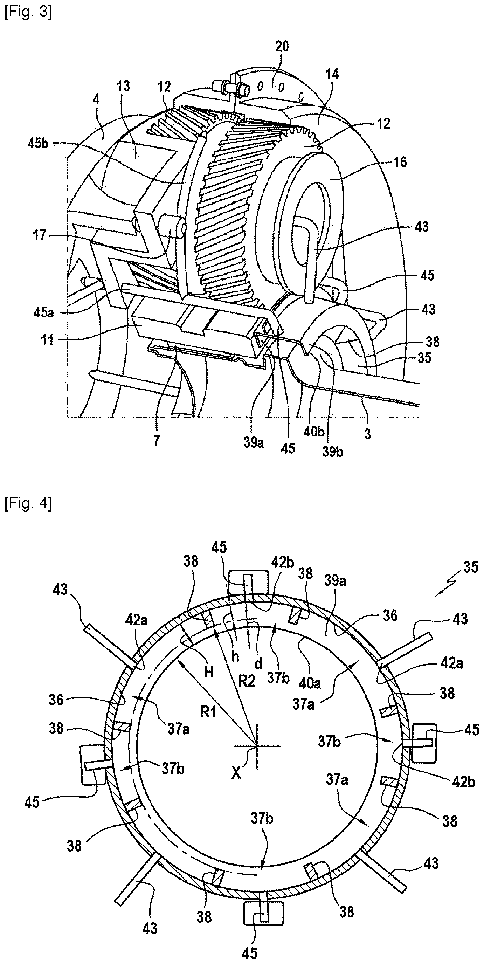

En référence aux figures 2 et 3, le réducteur comprend une couronne 14 qui est fixée par l'intermédiaire d'un carter de support 20 à ladite structure fixe 5a, 5b avec des moyens souples agencés pour lui permettre de suivre les mouvements éventuels de l'arbre de soufflante 4. Ces moyens de fixation sont connus de l'homme du métier et ne sont pas détaillés ici.

Une brève description peut en être trouvée par exemple dans FR-A1-2987416. Le réducteur 10 de l'exemple considéré embraye d'un part sur l'arbre BP3 par l'intermédiaire de cannelures 7 qui entraînent un pignon d'engrenage planétaire 11, et d'autre part sur l'arbre de soufflante 4 qui est attaché à un porte-satellites 13. Classiquement, le pignon planétaire 11, dont l'axe de rotation X est confondu avec celui de la turbomachine, entraîne une série de pignons de satellites 12, qui sont répartis régulièrement sur la circonférence du réducteur 10. Le nombre de satellites 12 est généralement défini entre trois et six. Les pignons de satellites 12 tournent aussi autour de l'axe X de la turbomachine, en engrenant sur des dents internes de la couronne 14, qui est montée fixe par rapport à la turbomachine, par l'intermédiaire du carter de support 20. Chacun des satellites 12 tourne librement autour d'un axe de satellite 16 relié au porte-satellite 13, à l'aide d'un palier qui peut être lisse, comme représenté sur la figure 2, ou un palier à éléments roulants (roulements à billes ou à rouleaux). La rotation des satellites 12 autour de leur axe de satellite 16, du fait de la coopération de leurs pignons avec les dents de la couronne 14, entraîne la rotation du porte-satellites 13 autour de l'axe X, et par conséquent celle de l'arbre de soufflante 4 qui lui est lié, à une vitesse de rotation qui est inférieure à celle de l'arbre BP 3. L'entraînement de l'arbre de soufflante 4 par le porte-satellites 13 est assuré par une série de doigts de centrage 17, répartis régulièrement sur la circonférence du réducteur 10, qui s'étendent axialement de l'extrémité aval de l'arbre de soufflante 4 et qui s'enfoncent dans des alésages pratiqués dans le porte-satellites 13. Le porte-satellites 13 s'étend symétriquement de part et d'autre des axes de satellite 16 et forme une enceinte dans laquelle pourra être mise en oeuvre une fonction de lubrification des engrenages. Des douilles 19 de fermeture, aux extrémités des axes de satellites 16, permettent de fermer cette enceinte au niveau des paliers des satellites 12.

La figure 2 montre, avec la figure 3, l'acheminement de l'huile vers le réducteur 10 et son cheminement à l'intérieur de celui-ci. Des flèches montrent sur la figure 2 le cheminement suivi par l'huile depuis, sur cet exemple, un réservoir tampon 31 lié à la structure fixe de la turbomachine, jusqu'aux pignons et aux paliers à lubrifier. Le dispositif de lubrification comporte schématiquement trois parties qui vont être décrites ci-après successivement, une première partie liée à la structure fixe et délivrant l'huile vers les parties tournantes du réducteur 10, un rouet tournant avec le porte-satellites 13 réceptionnant cette huile, et des circuits de distribution d'huile alimentés en huile par le rouet pour l'acheminer vers les endroits à lubrifier. La première partie comporte au moins un injecteur 32 dont l'extrémité calibrée est resserrée pour former un gicleur 33.

L'huile est amenée vers l'injecteur par une canalisation d'acheminement, en provenance du réservoir du moteur (non représenté). Un réservoir tampon 31 peut être 30 interposé à côté du réducteur 10 sur la canalisation, de préférence en partie haute de façon à ce que l'huile puisse s'écouler vers le centre du réducteur par gravité. Le gicleur 33 éjecte l'huile sous la forme d'un jet 34, qui se forme sous la pression produite conjointement par la pompe d'alimentation (non représentée) et par le poids de la colonne d'huile située au-dessus de lui. Le gicleur 33 est positionné ici radialement à l'intérieur du porte-satellites 13 par rapport à l'axe X et le jet 34 est orienté avec une composante radiale dirigée vers l'extérieur du réducteur 10.

En référence aux figures 3 et 4, le rouet de réception de l'huile lié au porte-satellites 13 comporte essentiellement une coupelle cylindrique, ici à section radiale en U, dont l'ouverture en U est orientée en direction de l'axe de rotation X. L'arbre 3 n'est pas représenté sur la figure 4 ; il est centré sur l'axe X.

Le rouet est agencé sur le porte-satellites 13 de manière à ce que le fond 36 du U de la coupelle 35 recueille le jet d'huile 34 éjecté par le gicleur 33.

Selon l'invention, la coupelle 35 du rouet est ici divisée en une succession circonférentielle de cuvettes 37a, 37b séparées par des parois 38 orientées radialement et s'étendant axialement entre les deux parois latérales 39a, 39b du U formé par la coupelle 35. Sur l'exemple présenté, les parois de séparation circonférentielle 38 délimitent deux séries alternées de quatre cuvettes 37a, 37b, avec une extension circonférentielle identique dans une série mais différente d'une série à l'autre. Les cuvettes sont ainsi circonférentiellement adjacentes autour de l'axe de rotation X. Les cuvettes définissent ainsi une pluralité de secteurs angulaires distincts au sein de la coupelle 35. Par centrifugation, lorsque le rouet tourne avec le porte-satellites 13, l'huile réceptionnée sur le fond 36 de la coupelle 35 est entraînée en rotation et mise en pression entre le fond 36 et les parois latérales 39a, 39b de la coupelle 35. Chaque cuvette 35a, 35b, en passant successivement devant le gicleur 33 au cours de la rotation, recueille une quantité d'huile proportionnelle à son extension circonférentielle. En effet, les bords radialement intérieurs des parois 39a-39b-38 d'une cuvette 37a, 37b définissent une surface d'entrée de la cuvette selon la direction radiale. Cette huile reste confinée entre les parois 38, 39a, 39b de la cuvette 37a, 37b tant que le niveau d'huile par rapport au fond 36 reste inférieur à la hauteur minimale h des parois 38 de celle-ci par rapport au fond 36. Les bords radiaux internes 40a, 40b des parois latérales 39a, 39b sont sensiblement circulaires. Leur rayon R1 définit une profondeur générale H de la coupelle 35 par rapport au fond 36.

Dans l'exemple illustré, les parois de séparation circonférentielle 38 ont un bord radial interne 41 situé à une distance R2 de l'axe X légèrement supérieure au rayon R1 des bords internes 40a, 40b des parois latérales 39a, 39b. Dans l'exemple illustré, la hauteur h des parois 38 de séparation circonférentielle par rapport au fond 36 des cuvettes 37a, 37b est donc légèrement inférieure à la hauteur H des parois latérales 39a, 39b par rapport à ce même fond 36. On définit ainsi une différence de hauteur d égale à H-h.

Cette différence de hauteur d est typiquement réduite, il suffit qu'elle permette à l'huile de s'écouler au-dessus des parois 38 de séparation circonférentielle au lieu de passer par les bords internes 39a, 39b des parois latérales 40a, 40b, si le niveau d'huile monte dans une cuvette 37a, 37b.

Typiquement, pour un réducteur 10 de turbomachine du type de celui présenté ici, une différence de hauteur d de l'ordre de 3 millimètres peut suffire.

Par ailleurs le fond 36 de chaque cuvette 37a, 37b comporte une ouverture 42a, 42b qui communique avec une canalisation 43, 45 d'un circuit de distribution d'huile installé sur le porte-satellites 13.

Les cuvettes comprennent des sorties d'huiles de lubrification destinées par exemple à la lubrification du réducteur 10.

En référence aux figures 2 et 3, les circuits de distribution d'huile sont ici de deux types. Une première série de circuits de distribution d'huile correspond à des premières canalisations 43, qui sont réparties en régulièrement sur la circonférence du réducteur 10 et en nombre égal à celui des satellites 12. Ces canalisations 43 partent radialement de l'ouverture 42a du fond de la première série de cuvettes 37a et pénètrent dans l'enceinte interne de chaque arbre de satellite 16, qui est refermée par le porte-satellites 13. L'huile qui circule dans les premières canalisations 43 pénètre dans la cavité interne de chaque axe de satellite 16 puis passe, du fait de la force centrifuge, dans des canaux de guidage 44, qui traversent ces axes de satellite 16 en étant orientés radialement. Ces canaux 44 débouchent à la périphérie des axes de satellites 16, au niveau des paliers supportant les pignons des satellites 12 et assurent ainsi la lubrification de ces paliers. La deuxième série de circuits de distribution d'huile comprend des secondes canalisations 45 qui cheminent, depuis les ouvertures 42b du fond des cuvettes 37b de la deuxième série de cuvettes entre les satellites 12 et se divisent en plusieurs canaux 45a, 45b. Les canaux 45a, 45b acheminent l'huile vers les engrenages formés par les pignons des satellites 12 et le pignon planétaire 11, d'une part, et les pignons des satellites 12 et la couronne externe 14, d'autre part. Chaque canal 45a s'étend axialement le long des pignons d'un satellite 12, entre ceux-ci et le planétaire 11, et forme une rampe de lubrification sur toute la largeur des pignons. Le canal 45b, qui alimente l'engrenage entre la couronne 14 et les pignons des satellites 12, projette son huile au centre du cylindre formé par chaque satellite 12. Comme représenté, chaque satellite 12 est réalisé sous la forme de deux pignons parallèles.

Leur denture est orientée en diagonale par rapport à l'axe de rotation du satellite 12, de façon à leur donner une fonction de rainures dans lesquelles l'huile est entraînée, depuis le milieu du cylindre jusqu'à sa périphérie, pour lubrifier l'engrenage sur toute sa largeur. Sur cet exemple, les premiers circuits de distribution d'huile 43-44 qui lubrifient les paliers supportant les satellites ont besoin d'acheminer un débit d'huile plus important que les deuxièmes circuits 45-45a-45b. Pour cette raison, l'extension circonférentielle des cuvettes 37a de la première série, qui leur correspondent, est plus importante que celle des cuvettes 37b de la deuxième série. Ici, un rapport de deux tiers à un tiers est recherché dans le débit d'huile en fonctionnement nominal ; l'extension circonférentielle des deux séries de cuvettes 37a, 37b reprend sensiblement ce rapport.

L'ensemble a ici été présenté en se référant à une architecture de réducteur 10 à quatre satellites 12 avec des deux séries de circuits de distribution d'huile 43-44, 45-45a-45b de types différents. Pour d'autres architectures de réducteurs, le nombre de cuvettes par série peut être différent. De même le nombre de séries de cuvettes ayant des extensions circonférentielles semblables peut être différent, suivant les types de circuits de distribution d'huile. Par exemple, les deuxièmes circuits de distribution d'huile pourraient être subdivisés en deux, l'un dédié à l'engrenage des pignons des satellites 12 avec le planétaire 11 et l'autre dédié à l'engrenage avec la couronne 14. Dans ce cas, une variante de réalisation du rouet de récupération d'huile est envisageable avec trois séries de cuvettes d'extensions circonférentielles différentes. On va maintenant décrire plusieurs modes de mise oeuvre du dispositif de lubrification, en relation avec la disposition des cuvettes 37a, 37b dans la coupelle 35.

On comprend cependant qu'une telle structure peut entrainer des remous et des irrégularités dans la répartition de la masse de fluide autour de l'axe X.

L'invention propose ainsi de réaliser des orifices 58 dans les parois 38 de séparation circonférentielle, de manière à permettre un passage de fluide entre les cuvettes adjacentes sans nécessiter un débordement du volume de la cuvette considérée au-dessus de la hauteur h de ses parois 38.

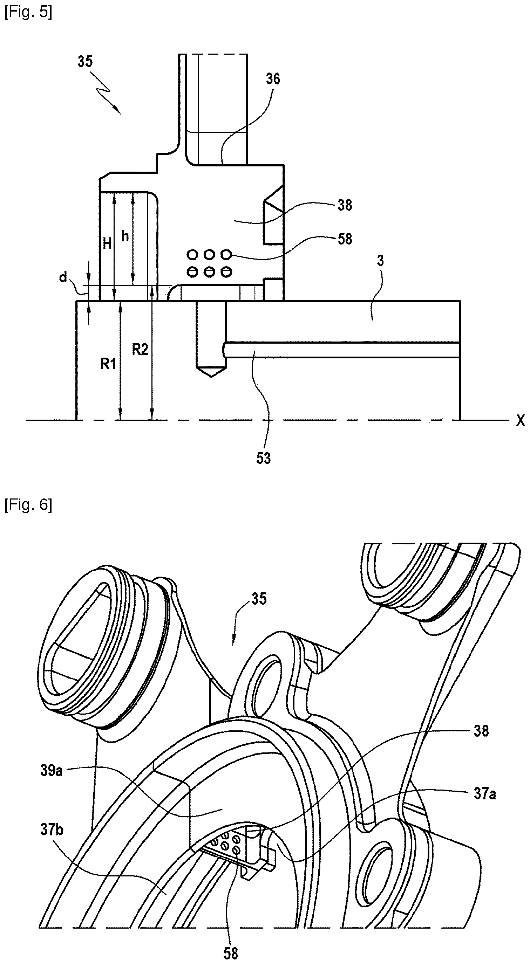

Les figures 5, 6 et 7 illustrent cet aspect de l'invention.

On représente ainsi sur les figures 5 et 6 deux vues présentant le détail d'orifices 58 formées dans les parois 38 séparant les différentes cuvettes 37a et 37b.

La figure 5 est une vue en coupe selon un plan parallèle à l'axe X, selon un plan passant par une paroi 38. On y voit ainsi un exemple d'orifices 58 formés dans une paroi 38 séparant deux cuvettes. Dans l'exemple illustré, on forme 6 orifices 58, dans une moitié radiale interne de la paroi 38. Par moitié radiale interne, on entend ici la partie de la paroi 38 délimitée par un anneau inscrit entre les rayons R2 et R2+h/2. En variante, les orifices 58 pourraient être formés dans une moitié radiale externe de la paroi 38, c'est-à-dire une partie de la paroi 38 délimitée par un anneau inscrit entre les rayons R2+h/2 et R2+h. Plus généralement, tout ou partie des orifices 58 peuvent être formés dans la moitié radiale interne ou dans la moitié radiale externe de la paroi 38. En variante, les orifices 58 peuvent être formés dans une partie quelconque de la paroi 38.

Les orifices 58 sont disposés de manière à définir une ou plusieurs rangées d'orifices dans les parois internes. Les rangées d'orifices sont par exemple disposées en lignes et en colonnes, de manière à former une matrice d'orifices.

Dans l'exemple illustré, des canaux 53 de circulation de fluide sont formés dans l'arbre 3. On comprend bien que ce mode de réalisation n'est pas limitatif.

Les orifices 58 permettent ainsi d'assurer un transfert de fluide entre les différentes cuvettes sans nécessiter un débordement de la cuvette considérée.

Un tel mode de réalisation permet ainsi de réaliser une égalisation du niveau de fluide entre les différentes cuvettes, sans générer des remous de fluide comme ce serait le cas pour un débordement au-dessus des parois 38 qui ne présenteraient pas de tels orifices 58.

L'emplacement des orifices 58 sur les parois 38 permet de déterminer à partir de quel niveau de fluide le transfert entre les différentes cuvettes est réalisé.

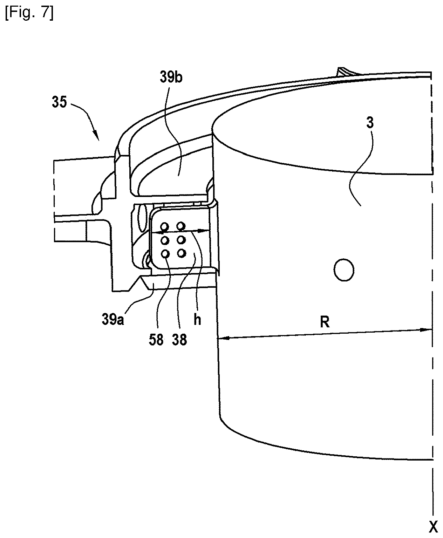

La figure 7 présente une variante, dans laquelle les parois 38 délimitant les différentes cuvettes au sein de la coupelle 35 du rouet sont formées sur l'arbre 3.

Les parois 38 s'étendent ainsi radialement autour de l'arbre 3, et forment des parois s'étendant selon la direction définie par l'axe X.

Comme pour le mode de réalisation décrit précédemment, les parois 38 présentent des orifices 58 formés de manière à permettre un passage de fluide entre les différentes cuvettes ainsi formées.

Comme précédemment, si on considère que les parois 38 présentent une hauteur h mesurée selon la direction radiale et que l'arbre 3 présente un rayon externe R, les orifices 58 peuvent être formés dans une partie radiale interne, comprise entre R et R+h/2, dans une partie radiale externe comprise entre R+h/2 et R+h, ou dans une partie quelconque des parois 38.

Tout ou partie des parois 38 peuvent être munies de tels orifices 58.

L'invention telle que proposée permet ainsi d'améliorer l'équilibrage du fluide dans un rouet de distribution de fluide par rapport aux structures connues, qui entraînent des débordements de fluide et ne permettent d'initier un début d'équilibrage qu'une fois qu'une situation fortement déséquilibrée s'est établie.

Bien que la présente invention ait été décrite en se référant à des exemples de réalisation spécifiques, il est évident que des modifications et des changements peuvent être effectués sur ces exemples selon les combinaisons des caractéristiques comme définies par les revendications. Par conséquent, la description et les dessins doivent être considérés dans un sens illustratif plutôt que restrictif.

## Revendications

1. Dispositif de lubrification pour un réducteur de turbomachine présentant un axe (X) principal,
le dispositif comprenant une coupelle (35) annulaire de collecte d'huile de lubrification délimitée par une première paroi (39a) et une seconde paroi (39b),
ladite coupelle (35) étant divisée par des parois (38) internes s'étendant entre la première paroi (39a) et la seconde paroi (39b) de manière à définir une pluralité de secteurs angulaires formant des cuvettes (37) de collecte d'huile, les cuvettes (37) étant circonférentiellement adjacentes autour de l'axe (X) et comprenant des sorties d'huiles de lubrification destinées à la lubrification du réducteur,
dans lequel une ou plusieurs desdites parois (38) internes présentent des orifices (58) permettant un passage d'huile entre les cuvettes (37) circonférentiellement adjacentes,
le dispositif étant **caractérisé en ce que** lesdits orifices (58) sont formés dans une ou plusieurs desdites parois (38) internes de manière à définir une ou plusieurs rangées d'orifices dans lesdites une ou plusieurs parois (38) internes.

2. Dispositif selon la revendication 1, dans lequel chacune desdites parois (38) interne comprend des orifices (58).

3. Dispositif selon l'une des revendications 1 ou 2, dans lequel lesdites parois (38) internes présentent une hauteur h mesurée selon la direction radiale par rapport à l'axe (X) principal, et dans lequel des orifices sont formés dans une moitié radiale interne de chaque paroi (38) interne.

4. Dispositif selon l'une des revendications 1 à 3, dans lequel lesdites parois (38) internes présentent une hauteur h mesurée selon une direction radiale par rapport à l'axe (X) principal, et dans lequel des orifices (53) sont formés dans une moitié radiale externe de chaque paroi (38) interne.

5. Dispositif selon l'une des revendications 1 à 4, dans lequel lesdites rangées d'orifices sont disposées, dans lesdites une ou plusieurs parois (38) internes, en lignes et en colonnes, de manière à former une matrice d'orifices.

6. Réducteur comprenant un arbre d'entrée, un solaire, des satellites et un arbre de sortie,
ledit réducteur comprenant un dispositif selon l'une des revendications 1 à 5 monté axialement autour de l'arbre d'entrée, de sorte que les sorties d'huile des cuvettes (37) sont orientées pour déboucher vers les satellites, le solaire ou des paliers des satellites.

7. Ensemble comprenant un arbre (3) s'étendant autour d'un axe (X) principal et un dispositif selon l'une des revendications 1 ou 2 s'étendant autour dudit axe (X) principal, dans lequel lesdites parois (38) internes sont formées sur l'arbre (3).

8. Ensemble comprenant un arbre (3) s'étendant autour d'un axe (X) principal et un dispositif selon l'une des revendications 1 ou 2 s'étendant autour dudit axe (X) principal, dans lequel lesdites parois (38) internes sont formées sur la coupelle (35).

9. Turbomachine comprenant un réducteur selon la revendication 6.

## Patentansprüche

1. Schmiervorrichtung für ein Reduktionsgetriebe einer Turbomaschine mit einer Hauptachse (X),
wobei die Vorrichtung einen ringförmigen Becher (35) zum Sammeln von Schmieröl umfasst, der durch eine erste Wand (39a) und eine zweite Wand (39b) begrenzt ist,
wobei der Becher (35) durch Innenwände (38) unterteilt ist, die sich zwischen der ersten Wand (39a) und der zweiten Wand (39b) erstrecken, um mehrere Winkelabschnitte zu definieren, die Schalen (37) zum Sammeln von Öl bilden, wobei die Schalen (37) umlaufend benachbart um die Achse (X) sind und Schmierölauslässe umfassen, die für die Schmierung des Reduktionsgetriebes bestimmt sind,
wobei eine oder mehrere der Innenwände (38) Öffnungen (58) aufweisen, die einen Durchlass von Öl zwischen den umlaufend benachbarten Schalen (37) ermöglichen,
wobei die Vorrichtung **dadurch gekennzeichnet ist, dass** die Öffnungen (58) in einer oder mehreren der Innenwände (38) gebildet sind, um eine oder mehrere Abfolgen von Öffnungen in der einen oder den mehreren Innenwänden (38) zu definieren.

2. Vorrichtung nach Anspruch 1, wobei jede der Innenwände (38) Öffnungen (58) umfasst.

3. Vorrichtung nach einem der Ansprüche 1 oder 2, wobei die Innenwände (38) eine Höhe h gemessen entlang der radialen Richtung in Bezug auf die Hauptachse (X) aufweisen und wobei die Öffnungen in einer radialen inneren Hälfte jeder Innenwand (38) gebildet sind.

4. Vorrichtung nach einem der Ansprüche 1 bis 3, wobei die Innenwände (38) eine Höhe h gemessen entlang einer radialen Richtung in Bezug auf die Hauptachse (X) aufweisen und wobei die Öffnungen (53) in einer radialen äußeren Hälfte jeder Innenwand (38) gebildet sind.

5. Vorrichtung nach einem der Ansprüche 1 bis 4, wobei die Abfolgen von Öffnungen in der einen oder den mehreren Innenwänden (38) in Reihen und in Spalten angeordnet sind, um eine Öffnungsmatrix zu bilden.

6. Reduktionsgetriebe, umfassend eine Eingangswelle, eine Solarwelle, Satelliten und eine Ausgangswelle,
wobei das Reduktionsgetriebe eine Vorrichtung nach einem der Ansprüche 1 bis 5 umfasst, die axial um die Eingangswelle montiert ist, sodass die Ölauslässe der Schalen (37) ausgerichtet sind, um sich zu den Satelliten, der Solarwelle oder den Satellitenlagern hin zu öffnen.

7. Baugruppe, umfassend eine Welle (3), die sich um eine Hauptachse (X) erstreckt, und eine Vorrichtung nach einem der Ansprüche 1 oder 2, die sich um die Hauptachse (X) erstreckt, wobei die Innenwände (38) auf der Welle (3) gebildet sind.

8. Baugruppe, umfassend eine Welle (3), die sich um eine Hauptachse (X) erstreckt, und eine Vorrichtung nach einem der Ansprüche 1 oder 2, die sich um die Hauptachse (X) erstreckt, wobei die Innenwände (38) auf dem Becher (35) gebildet sind.

9. Turbomaschine, umfassend ein Reduktionsgetriebe nach Anspruch 6.

## Claims

1. A lubrication device for a turbomachine reduction gear having a main axis (X),
the device comprising an annular lubricating oil collecting cup (35) delimited by a first wall (39a) and a second wall (39b),
said cup (35) being divided by internal walls (38) extending between the first wall (39a) and the second wall (39b) so as to define a plurality of angular sectors forming oil collecting basins (37), the basins (37) being circumferentially adjacent around the axis (X) and comprising lubricating oil outlets intended for the lubrication of the reduction gear,
wherein one or more of said internal walls (38) have openings (58) allowing oil to pass between the circumferentially adjacent basins (37)
said device being **characterized in that** said openings (58) are formed in one or more of said internal walls (38) so as to define one or more rows of openings in said one or more internal walls (38).

2. The device according to claim 1, wherein each of said internal walls (38) comprises openings (58).

3. The device according to claim 1 or claim 2, wherein said internal walls (38) have a height h measured in the radial direction relatively to the main axis (X), and in which the openings (58) are formed in a radially internal half of each internal wall (38).

4. The device according to any one of claims 1 to 3, wherein said internal walls (38) have a height h measured in a radial direction relative to the main axis (X), and wherein openings (58) are formed in a radially external half of each internal wall (38).

5. The device according to any one of claims 1 to 4, wherein said rows of openings are arranged, in said one or more internal walls (38), in lines and in columns, so as to form a matrix of openings.

6. A reduction gear comprising an input shaft, a sun wheel, planet gears and an output shaft,
said reduction gear comprising a device according to any one of claims 1 to 5 mounted axially around the input shaft, so that the oil outlets of the basins (37) are oriented to lead to the planet gears, the sun wheel or the planet gear bearings.

7. An assembly comprising a shaft extending around a main axis and a device according to any one of claim 1 or 2 extending around said main axis (X), wherein said internal walls (38) are formed on the shaft (3).

8. The assembly comprising a shaft extending around a main axis and a device according to any one of claim 1 or 2 extending around said main axis (X), wherein said internal walls (38) are formed on the cup (35).

9. A turbomachine comprising a reduction gear according to claim 6.
